Europäisches Patentamt

**European Patent Office**

Office européen des brevets

(11) Publication number : **0 449 349 B1**

(12) # EUROPEAN PATENT SPECIFICATION

(45) Date of publication of patent specification :
**27.04.94 Bulletin 94/17**

(51) Int. Cl.⁵ : **G09C 1/00**, G09C 5/00,
H04L 9/30

(21) Application number : **91200523.8**

(22) Date of filing : **12.03.91**

(54) **Method for the modular reduction of numbers.**

(30) Priority : **15.03.90 NL 9000593**

(43) Date of publication of application :
**02.10.91 Bulletin 91/40**

(45) Publication of the grant of the patent :
**27.04.94 Bulletin 94/17**

(84) Designated Contracting States :
**AT BE CH DE DK ES FR GB GR IT LI LU NL SE**

(56) References cited :
EP-A- 0 350 278
EP-A- 0 381 523

(56) References cited :
US-A- 4 424 414
ELECTRONICS LETTERS, vol. 21, no. 17, 15th
August 1985, page 761, London, GB; S.B.
MOHAN et al.: "Fast algorithms for imple-
menting RSA public key cryptosystem"
PATENT ABSTRACTS OF JAPAN, vol. 14, no.
340 (P-1080)[4283]. 23rd July 1990; & JP-A-2
116 884 (TOSHIBA CORP.) 01-05-1990

(73) Proprietor : **Koninklijke PTT Nederland N.V.**
**P.O. Box 95321**
**NL-2509 CH The Hague (NL)**

(72) Inventor : **The inventor has agreed to waive**
**his entitlement to designation.**

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

EP 0 449 349 B1

## Description

The invention relates to a method for the modular reduction of a not more than 2n-digit number x to obtain a not more than n-digit remainder in accordance with the formula $r \equiv x \pmod{p}$, where p is the chosen modulus, for the purpose of cryptographic calculations which are based on the general discrete logarithm problem in a number system with base b.

In cryptographic techniques, use may be made of exponentiation modulo large prime number. An example of this is a cryptographic technique which is based on the discrete logarithm problem which is described by w. Diffie and M.E. Hellman in the paper entitled "New directions in Cryptography" in IEEE Trans. on Information Theory, vol. IT-22, pages 644-654, 1976.

This paper describes a discrete exponentiation modulo prime number p for use in a public key distribution system. This so-called DH system makes use of publicly known messages in the following way in order to construct a secret common key. Choose a prime number p for which it is true that p - 1 has at least one large prime factor, and an integer z from the set {2,3,.....,p - 1}. These two numbers are made public. Every user now arbitrarily chooses a number x from the set {2,3,......,p - 2}, keeps it secret and calculates the number $y = z^x \pmod{p}$. Two users a and b send their numbers y, i.e. $y_a$ and $y_b$, respectively, to each other. With the aid of his own value of x, $x_a$, and the $y_b$ received, user a can calculate a secret key $k_a$ in accordance with

$$k_a = y_b{}^{Xa} \equiv z^{XaXb} \pmod{p}.$$

With the aid of his own value of x, $x_b$, and the $y_a$ received, user b can calculate a secret key inaccordance with: $k_b = y_a{}^{Xb} \equiv z^{XbXa} \pmod{p}$. It will be clear that $k_a = k_b = k$ and that the users have constructed a common secret key in this way.

Because the taking of the discrete logarithm has hitherto been regarded as virtually impossible, it is also virtually impossible to calculate the integers $x_a$ and $x_b$ or the key k starting from the numbers $y_a$ and $y_b$. Methods other than that of taking the discrete logarithm to calculate these values have hitherto not been known. Exponentiation modulo large prime number, the exponentiation being carried out first and the result thereby obtained then being reduced results quite quickly in unacceptably long computation times, while the memory capacity required in that case becomes very large. See also US-A-4 405 829 of Rivest, Shamir and Adleman concerning the RSA system.

In "The Art of Computer Programming", Vol. 2: Seminumerical Algorithms, 2nd edition, Addison Wesley, 1981, D.E. Knuth describes how an exponentiation can be imagined as built up of repeated multiplication and squaring. He also describes how modular exponentiation can be simplified by making use of modular reduction in every multiplication step and squaring step. Said modular reduction generally takes place by making use of a division algorithm. If the modulus p is the divisor and the number to be reduced is x, the remainder obtained after division gives the desired results; or:

$$x = q.p + r,$$

where q is the quotient, this being written in the present description as

$$r \equiv x \pmod{p}.$$

If the opportunity is seen of accelerating the modular reduction, the exponentiation can also be accelerated and the object of the invention is therefore to provide a method for the rapid modular reduction of a large number from a number system with base b by means of an iterative division algorithm. Such division algorithms are known per se from, for example, the paper entitled "Fast algorithms for implementing RSA public key cryptosystem" by S.B. Mohan and B.S. Adiga in Electronics Letters, vol. 21, no. 17, August 1985, which describes an iterative division algorithm for use in the RSA system, which algorithm has been developed exclusively for the binary system and for a composite modulus which is made up of the product of two large prime numbers and a number of smaller prime numbers. The paper entitled "A practical fast exponentiation algorithm for public key" by H.R. Chivers, International Conference on Secure Communications Systems, London, 22-23 February 1984, furthermore describes an accelerated division algorithm for use in encoding system of Diffie and Hellman. In this case, however, it is proposed to make use of remainder tables, and this is often undesirable in view of the memory space required for such tables. Still another method of modulo reduction is disclosed in EP-A-0 350 278. The object of the invention is, more particularly, to provide a method for fast modular reduction which is efficient to implement in software, preferably with a minimum of program lines, which is of great importance, in particular, if said program is present in the processor present on a so-called smart card. This object must at the same time be fulfilled without diminishing the safety of the cryptographic protocol, for the purpose of which the modular reduction is carried out.

For a general description of the way in which a cryptographic system can be used in combination with a smart card, reference is made to the paper entitled "The Smart Card: A high security tool in EDP" by R.C. Ferreira in Philips Telecommunication and Data Review, PTR, Volume 47, no. 3, September 1989, pages 1 - 19.

However, said paper describes the use in cryptographic systems in which the discrete logarithm problem does not occur.

In order to fulfil the objects described, the invention provides a method of the abovementioned type in which it holds true for the modulus p that $p = b^n - a$, where $0 < a < b$. More particularly, the invention is characterised in that the 2n-digit number x is always split into two n-digit numbers $x_H$ and $x_L$ in accordance with the formula

$$x = (x_H \cdot b^n) + x_L,$$

where

$$x_H = \sum_{i=0}^{n-1} x_{i+n} \cdot b^i \quad \text{and} \quad x_L = \sum_{i=0}^{n-1} x_i \cdot b^i \quad \text{where } 0 \leq x_i, \ x_{i+n} < b;$$

in that the remainder r is determined by first calculating:

$$r_{temp} = x_L + a \cdot x_H;$$

in that it is then determined whether the following is fulfilled:

$$r_{temp} < b^n;$$

in that, if this is the case, it holds true that:

$$r = r_{temp};$$

in that, if this is not the case, an integer c is calculated which is determined by the value of $r_{temp}/b^n$ rounded downwards to the nearest integer and $r_{temp}$ is calculated in accordance with:

$$r_{temp} = r_{temp} - c \cdot b^n$$

and in that this step is repeated until the following is fulfilled:

$$r_{temp} < b^n,$$

whereafter it holds true that:

$$r = r_{temp}.$$

The invention can be explained in greater detail in the following manner.

Suppose that x, the number to be reduced, and r, the remainder, are positive integers and that their representation in the system with base b is given by:

$$(x)_b = \sum_{i=0}^{2n-1} x_i \cdot b^i \quad \text{and} \quad (r)_b = \sum_{i=0}^{n-1} r_i \cdot b^i \quad \text{where } 0 \leq x_i, \ r_i < b.$$

For the modulus p it holds true that

$$(p)_b = \sum_{i=0}^{n-1} p_i \cdot b^i = b^n - a \quad \text{where } 0 < a < b \text{ and } n > 1.$$

The modular reduction can now be carried out as follows:

$(r)_b \equiv (x)_b \pmod{(p)_b} = (x)_b - ((k)_b \cdot (p)_b) = (X)_b - (k)_b \cdot b^n + (k)_b \cdot a$, where $(k)_b$ is so chosen that this equation is fulfilled.

If it is assumed that use is made of registers having a length of n digits, the number $(x)_b$ can be reproduced by two n-digit registers $(x_H)_b$ and $(x_L)_b$ as:

$$(x)_b = ((x_H)_b \mid 1(x_L)_b = (x_H)_b \cdot b^n + (x_L)_b,$$

with

$$(x_H)_b = \sum_{i=0}^{n-1} x_{i+n} \cdot b^i \quad \text{and} \quad (x_L)_b = \sum_{i=0}^{n-1} x_i \cdot b^i$$

From this it follows that if $(x_H)_b = (k)_b$ is chosen, the reduced $(x)_b$ can be obtained by adding the number $a \cdot (x_H)_b$ to $(x_L)_b$ and by continuing to do this with the $(x_H)_b$ produced after the addition until $(x_H)_b = 0$ and therefore $(x)_b < b^n$.

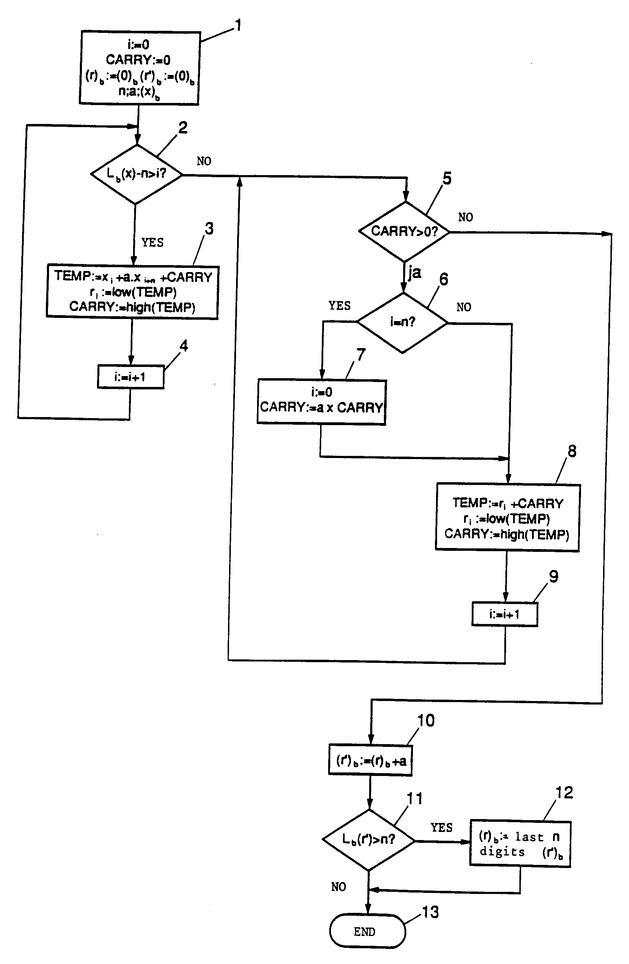

The flow diagram shown in the drawing reproduces the method according to the invention in more detail for a number in the system with base b.

If it is true for a number w in the system with base b that: $w = y \cdot b + x$, the functions low ( ) and high ( ) are defined as:

$$low(w) = x \text{ and } high(w) = y.$$

The length $n = L_b(s)$ of a number $(s)_b$ in the system with base b follows from:

$$L_b(s) = max\{i \mid (s)_b \geq b^i\} + 1.$$

The modular reduction $(r)_b \equiv (x)_b \pmod{(b^n - a)_b}$ then proceeds in the way shown in the flow diagram.

Block 1 shows that, at the beginning of the modular reduction of a number $(x)_b$, the loop variable i and the variable CARRY are equal to 0 and the remainder values $(r)_b$ and $(r')_b$ are equal to $(0)_b$, n and a being predetermined constants which determine the modulus. For $(x)_b$ and for $(r)_b$, the formulae already given above apply:

$$(x)_b = \sum_{i=0}^{2n-1} x_i \cdot b^i \quad \text{and} \quad (r)_b = \sum_{i=0}^{n-1} r_i \cdot b^i, \quad \text{where } 0 \leq x_i, \ r_i < b.$$

In block 2, whether the length of $(x)_b$, i.e. $L_b(x)$, minus n is greater than i is determined. If that is the case, a temporary number TEMP is determined in block 3 in accordance with TEMP $= x_i + a \cdot x_{i+n} +$ CARRY, $r_i$ then becoming equal to low(TEMP) and the variable CARRY equal to high(TEMP).

Then the loop variable i in block 4 is increased by 1 so that it becomes equal to i + 1, and block 2 is reverted to. When, at a certain instant, it is the case in block 2 that $L_b(x) - n \leq i$, the modular reduction is continued in block 5 by determining whether CARRY is greater than 0, and if this is not the case, the remainder $(r)_b$ is known in principle. If CARRY is in fact greater than 0, a determination is first made in block 6 of whether i is equal to n. If this is the case, the loop variable i is again put equal to 0 in block 7 and the variable CARRY is multiplied by the constant a, after which block 8 is proceeded to. If it is found in block 6 that i is not equal to n, block 8 is also proceeded to. In block 8, TEMP is put equal to

TEMP $= r_i +$ CARRY, $r_i$ then becoming equal to low(TEMP) and the variable CARRY becomes equal to high(TEMP). Then the loop variable i is increased by 1 in block 9 so that it becomes equal to i + 1, and the loop is run through again, starting at block 5 until it is finally true that CARRY $\leq 0$, which in principle determines the remainder.

Once the remainder $(r)_b$ has been determined in block 5, there is the possibility that the remainder $(r)_b$ is nevertheless greater than the modulus p, the chance of this being $a/b^n$.

For this reason an auxiliary remainder $(r')_b = (r)_b + a$ is calculated in block 10 and in block 11 a check is made on whether the length of $(r')_b$, i.e. $L_b(r')$, is in fact greater than n and if this is not the case, the calculated remainder $(r)_b$ is already the true remainder. However, if $L_b(r')$ is in fact greater than n, the true remainder $(r)_b$ is calculated in block 12 by taking the last n digits $(r')_b$. Block 13 indicates the end of the calculation of the remainder $r_b$. As will be explained further below, the steps according to the blocks 10, 11 and 12 are in many cases superfluous because if it is found in block 5 that the CARRY is not greater than 0, an n-digit remainder has already been calculated, and this is in principle the object of the method according to the invention.

With the method according to the invention as explained above, a modular reduction is possible with the aid of a limited number of multiplications if a > 1 and even no multiplication at all if a = 1. If a = 1, the loop formed in the flow diagram formed by the blocks 2, 3 and 4 is executed not more than n times, without multiplications having to be carried out and block 7 is executed not more than once, also without multiplications being necessary. If a > 1, the loop formed by the blocks 2, 3 and 4 in the flow diagram is executed not more than n times, not more than n multiplications having to be carried out in block 3 and block 7 is executed not more than twice, not more than 2 multiplications being necessary, so that if a > 1, the maximum number of multiplications needed is n + 2.

The flow diagram described above provides an explanation of the method according to the invention for a calculation in software, the entire calculation of the n-digit remainder $(r)_b$ of the 2n-digit number $(x)_b$ in the system with base b being carried out digit by digit. However, it will be immediately obvious to those skilled in the art that the method according to the invention can also be implemented in an extremely efficient way in hardware, in which case multiplications by n-digit numbers are carried out directly. The invention will be illustrated further with reference to two numerical examples in the decimal system, use being made of such multiplications by n-digit numbers for the sake of simplicity.

In the decimal system, b = 10. Furthermore, the number 9991 is chosen for the modulus $(p)_{10}$, so that n = 4 and a = $b^n$ - $(p)_{10}$ = $10^4$ - 9991 = 0009.

In the first example, the remainder of the number 99980001 is sought.

According to the first step of the algorithm it is calculated that:

$$(x_H)_{10} \cdot a + (x_L)_{10} = 9998 \times 0009 + 0001 = 00089983.$$

The carry, the newly-formed $(x_H)_{10}$, is thus found to be equal to 0008 and $(x_L)_{10}$ = 9983, and because the carry is greater than zero, the following calculation is carried out:

$$\text{carry} \times a + (x_L)_{10} = 0008 \times 0009 + 9983 = 00010055.$$

Again the carry, the newly-formed $(x_H)_{10}$ is greater than zero so that a calculation is again carried out:

$$\text{carry} \times a + (x_L)_{10} = 0001 \times 0009 + 55 = 0064.$$

The carry is now equal to zero and the remainder is therefore known in principle and is equal to the last $(x_L)_{10}$ calculated = 0064. As has already been noted above in the description of the flow diagram, there is a slight chance that the calculated remainder $(r)_{10}$ is greater than $(p)_{10}$. However, because the invention is in principle aimed at the fast modular reduction of a 2n-digit number to an n-digit number, it is of less importance whether the n-digit remainder found is also the true remainder or whether it yet again contains more than the modulus. In the first example given above, it is clear that $(r)_{10}$ < $(p)_{10}$, so that an explanation of the steps according to the blocks 10 - 12 in the flow diagram is of little interest for this example. However, by adding the value of a to the n-digit remainder found and determining whether the length of the auxiliary remainder $(r')_{10}$ thereby calculated is greater than n, the true remainder can always be determined, as will be illustrated by reference to the following example.

In the second example, the remainder of 19987 is sought. According to the first step of the algorithm, the following calculation is carried out:

$$(x_H)_{10} \cdot a + (x_L)_{10} = 0001 \times 0009 + 9987 = 9996.$$

The carry is now equal to zero and the remainder $(r)_{10}$ is therefore known in principle, but it is not known, however, if this is the true remainder. For this reason, the following calculation is furthermore first carried out:

$$(r')_{10} = (r)_{10} + a = 9996 + 0009 = 10005.$$

The value of $(r')_{10}$ is found to be greater than n and the true remainder $(r)_{10}$ is therefore determined by taking the last 4 digits of $(r')_{10}$, so that $(r)_{10}$ is found to be = 0005.

The modular reduction described above is of importance in order to be able to carry out cryptographic methods efficiently and rapidly, with use being made of exponentiation modulo large prime number such as the DH system described above. A number of other types of these cryptographic methods will be briefly discussed below.

A secret m can be exchanged by the so-called Three-Pass protocol with the aid of discrete exponentiation modulo known prime number p, possibly made public. This is done in the following way: As in the DH system, the users a and b both choose a secret arbitrary number x, $x_a$ and $x_b$ respectively, but they now both calculate a secret $x^{-1}$ which satisfies the relationship:

$$x \cdot x^{-1} \equiv 1 \ (\text{mod } p - 1).$$

If user a wishes to send the secret message m to user b, he calculates

$$y \equiv m^{X_a} \ (\text{mod } p)$$

and sends it to b. User b now calculates:

$$Z = y^{X_b} \equiv m^{X_a \cdot X_b} \ (\text{mod } p)$$

and sends it back to a. User a now calculates:

$$Z^{X_a^{-1}} = m^{X_a \cdot X_b \cdot X_a^{-1}} \equiv m^{X_b} \ (\text{mod } p)$$

and sends it back to b. From this, user b can calculate the secret message via:

$$(m^{X_b})^{X_b^{-1}} = m^{X_b \cdot X_b^{-1}} \equiv m \ (\text{mod } p).$$

A third cryptographic system is known from US-A- 4 424 414 under the name of the Pohlig-Hellman (PH) system, and here again, use is made of a prime number p for which it holds true that p - 1 has at least one large prime factor. In the PH system, the users a and b choose secret numbers $x_a$ and $x_b$ so that it holds true that

$$x_a x_b \equiv 1 \ (\text{mod } p - 1).$$

A secret message m can now therefore be exchanged between a and b with the aid of the following two functions: The encoding function $E_a$ for a and the decoding function $D_b$ for b is given by:

$$E_a(y) = D_b(y) \equiv y^{Xa} \pmod{p}.$$

The decoding function $D_a$ for a and the encoding function $E_b$ for b is given by:

$$D_a(y) = E_b(y) \equiv y^{Xb} \pmod{p}.$$

**Claims**

1. Method for the modular reduction of a not more than 2n-digit number x to obtain a not more than n-digit remainder r in accordance with the formula $r \equiv x \pmod{p}$, where p is the chosen modulus, for the purpose of cryptographic calculations which are based on the general discrete logarithm problem in a number system with base b, in which method p is a n-digit number for which it holds true that $p = b^n - a$, where $0 < a < b$.

2. Method according to claim 1, characterized in that the 2n-digit number is always split into two n-digit numbers $x_H$ and $x_L$ in accordance with the formula

$$x = (x_H \cdot b^n) + x_L,$$

where

$$x_H = \sum_{i=0}^{n-1} x_{i+n} \cdot b^i \text{ and } x_L = \sum_{i=0}^{n-1} x_i \cdot b^i, \text{ where } 0 \leq x_i, x_{i+n} < b;$$

in that the remainder r is determined by first calculating:

$$r_{temp} = x_L + a \cdot x_H;$$

in that it is then determined whether the following is fulfilled:

$$r_{temp} < b^n;$$

in that, if this is the case, it holds true that:

$$r = r_{temp};$$

in that, if this is not the case, an integer c is calculated which is determined by the value of $r_{temp}/b^n$ rounded downwards to the nearest integer and $r_{temp}$ is calculated in accordance with:

$$r_{temp} = r_{temp} - c \cdot b^n$$

and in that this step is repeated until the following is fulfilled:

$$r_{temp} < b^n,$$

whereafter it holds true that:

$$r = r_{temp}.$$

3. Method according to claim 2, characterised in that $r' = r + a$ is calculated, after which the true remainder is equal to the last n digits of r' if $r' > b^n$ and is equal to r if $r' < b^n$.

**Patentansprüche**

1. Verfahren zur modularen Reduktion einer Zahl x von nicht mehr als 2n-Ziffern, um einen Rest r von nicht mehr als n-Ziffern gemäss der Formel $r \equiv x \pmod{p}$ zu berechnen, worin p der gewählte Modul zum Zweck kryptographischer Berechnungen ist, die auf dem allgemeinen diskreten Logarithmusproblem in einem Zahlensystem zur Basis b beruhen, wobei nach diesem Verfahren p eine Zahl von n-Ziffern ist, für die gilt, dass $p = b^n - a$, worin $0 < a < b$ ist.

2. Verfahren nach Anspruch 1, dadurch gekennzeichnet, dass die Zahl von 2n-Ziffern immer in zwei Zahlen $x_H$ und $x_L$ von n-Ziffern, nach der Formel

$$x = (x_H \cdot b^n) + x_L$$

gespalten ist, worin

EP 0 449 349 B1

$$x_H = \sum_{i=0}^{n-1} x_{i+n} \cdot b^i \quad \text{und} \quad x_L = \sum_{i=0}^{n-1} x_i \cdot b^i,$$

mit $0 \leq x_i$, $x_{i+n} < b$, dass der Rest r durch eine erste Rechnung:

$$r_{temp} = x_L + a.x_H$$

bestimmt wird, dass dann bestimmt wird, ob das folgende erfüllt ist,

$$r_{temp} < b^n,$$

dass, wenn dies zutrifft, gilt,

$$r = r_{temp}$$

dass, wenn dies nicht zutrifft, eine ganze Zahl c dadurch berechnet wird, dass sie durch den Wert von $r_{temp}/b^n$, abgerundet nach unten auf die nächste ganze Zahl bestimmt wird und $r_{temp}$ gemäss:

$$r_{temp} = r_{temp} - c.b^n$$

berechnet wird, und dass dieser Schritt wiederholt wird, bis das folgende:

$$r_{temp} < b^n$$

erfüllt wird, worauf gilt:

$$r = r_{temp}.$$

3. Verfahren nach Anspruch 2, dadurch gekennzeichnet, dass r' = r + a berechnet wird, worauf der wahre Rest gleich den letzten n Ziffern von r', falls $r' > b^n$, und gleich r ist, falls $r' < b^n$.

**Revendications**

1. Procédé permettant d'effectuer la réduction modulaire d'un nombre x n'ayant pas plus de 2n chiffres afin d'obtenir un reste r n'ayant pas plus de n chiffres obéissant à la formule :
   $r \equiv x$ (modulo p), où p est le coefficient de réduction modulaire choisi, dans le but de réaliser des calculs cryptographiques qui reposent sur le problème général du logarithme discret dans un système numérique à base b, dans lequel procédé p est un nombre à n chiffres pour lequel il est vérifié que $p = b^n - a$, où $0 < a < b$.

2. Procédé selon la revendication 1, caractérisé en ce que le nombre à 2n chiffres est toujours séparé en deux nombres à n chiffres, $x_H$ et $x_L$, d'après la formule
   $$x = (x_H.b^n) + x_L,$$
   où

$$x_H = \sum_{i=0}^{n-1} x_{i+n} \cdot b^i \quad \text{et} \quad x_L = \sum_{i=0}^{n-1} x_i \cdot b^i, \text{ où } 0 \leq x_i, x_{i+n} < b \ ;$$

en ce qu'on détermine le reste r en commençant par calculer:
$$r_{temp} = x_L + a.x_H;$$
en ce qu'on détermine alors si la formule suivante est satisfaite :
$$r_{temp} < b^n;$$
en ce que, si cette formule est satisfaite il est vérifié que :
$$r = rt_{emp};$$
en ce que si ce n'est pas le cas on calcule un entier c qui est déterminé par la valeur de $r_{temp}/b^n$ arrondie vers le bas à l'entier le plus proche et on calcule $r_{temp}$ d'après la formule suivante :
$$r_{temp} = r_{temp} - c.b^n;$$
et en ce qu'on répète cette opération jusqu'à ce que la formule suivante soit satisfaite :
$$r_{temp} < b^n;$$
après quoi il est vérifié que :
$$r = r_{temp}.$$

3. Procédé selon la revendication 2, caractérisé en ce qu'on calcule r' = r + a, après quoi le vrai reste est égal aux n derniers chiffres de r' si $r' > b^n$ et est égal à r si $r' < b^n$.

7